# EUROPEAN PATENT SPECIFICATION

(11) **EP 1 631 402 B1**
(45) Date of publication and mention of the grant of the patent: **26.10.2011**
(21) Application number: 04722759.0
(22) Date of filing: 23.03.2004
(51) Int. Cl.: B21K 1/06, B60B 35/08

(54) **METHOD FOR MANUFACTURING HOLLOW CONSTRUCTION ELEMENTS**
VERFAHREN ZUR HERSTELLUNG HOHLER BAUELEMENTE
PROCEDE DE PRODUCTION D'ELEMENTS DE CONSTRUCTION CREUX

(30) Priority: 06.06.2003 SE 0301704
(43) Date of publication of application: 08.03.2006
(73) Proprietor: VOLVO LASTVAGNAR AB, 405 08 Göteborg (SE)
(72) Inventor: FUKS, Leon, S-424 50 GÖTEBORG (SE); PETERSEN, Stefan, S-416 17 Göteborg (SE)
(74) Representative: Andersson, Per Rune
(86) International application number: PCT/SE2004/000429
(87) International publication number: WO 2004/108326

(56) References cited:
- EP-A1- 0 015 648
- EP-A2- 0 059 038
- WO-A1-02/076652
- US-A- 6 122 948
- PATENT ABSTRACTS OF JAPAN vol. 1999, no. 04 30 April 1999 & JP 11 011105 A (HITACHI METALS LTD. ET AL.) 19 January 1999

## Description

### TECHNICAL FIELD

The invention relates to a method for manufacturing hollow composite construction elements, preferably intended for use in vehicles, and a construction element manufactured according to the method, (see for example WO-A-02076652).

### BACKGROUND ART

There are requirements in many areas today for products which are weight-optimized while retaining function and strength. This applies in particular to forged products, which can be heavy and difficult to optimize owing to limitations of the tools used in manufacture.

An example is front axle beams for heavy-duty vehicles. These beams are typically forged as an I-profile where the web, or the core, in the beam cross section has little influence on the torsional stiffness. With strength calculations, it is possible to demonstrate that a tubular cross section, with the material moved as far radially outward as possible, is optimal for such a construction. This applies in particular to what is known as the swan-neck on the front axle beam, between its central part and a kingpin support. With conventional forging technology, however, it is difficult to achieve such a solution. EP-A2-0 059 038 discloses a front axle beam forged lying in a conventional way, that is to say that the blank lies with its final vertical plane (after mounting) in the horizontal plane during working. The specification describes how a blank is preshaped by rolling and is then moved between a number of presses, which forge all or parts of the blank into the desired shape. The disadvantage of the solution is, as indicated above, that the web of the beam is mostly centrally located, which has little influence on the torsional stiffness.

An alternative solution emerges from EP-A1-0 015 648, which describes forging of a rectangular, hollow front axle beam starting from a tubular blank. While it is possible with this method to obtain a beam with greater torsional stiffness, it also gives rise to a number of problems. In order to produce the tapering ends of the beam, these have to be drawn through a die. Although the material is, seen radially, distributed further out from the center of the beam, the possibility of controlling the material thickness is very limited. This also applies to the other parts of the beam, because the starting material is a tube with constant material thickness. Moreover, a great deal of machining of the beam ends is required in order to produce kingpin supports, and separate attachments for air bellows, for example, have to be mounted.

Another solution emerges from US-A-6 122 948, which specification discloses a hydroformed front axle beam. In this case too, the starting point is a tubular blank, which is first bent into the desired basic shape and is then hydroformed into its final shape. The disadvantage of this solution is that, as in the example above, it is not possible to control the distribution of the material along the length of the profile. The profile also has to be provided with a number of separate mountings, not only for the air bellows but also for the holders for the kingpins. These have to be attached by welding, for example, which gives the beam an inherent corrosion-sensitive weakening.

Finally, it is also possible to cast hollow frame axle beams, which emerges from JP-A-11-011105. For reasons associated with the casting process, however, there is a limitation with regard to maximum and minimum material thickness, and there are requirements for reinforcing ribs, complicated casting cores and the like in order to permit casting of such an advanced profile. In addition, there are further limitations as far as the material choice possible in practice is concerned, and financial consequences for the unit price of the axle beams owing to the greatly increased costs a casting process would involve.

The majority of the problems mentioned above are solved by the manufacturing method according to the invention, which method results in a considerably greater possibility of accurately controlling the distribution of material around and along a forged profile.

### DISCLOSURE OF INVENTION

The invention relates to a method for manufacturing a hollow, elongate construction element, in accordance with claim 1 and its subordinate claims, and a construction element according to claim 13 produced using the method.

The method comprises the following steps:
(a) a first blank is conveyed through a furnace for heating to working temperature,
(b) the first blank is conveyed between a pair of rolls with profiled surfaces, the blank being preshaped in one or more steps to form an intermediate product with a predetermined profile along its longitudinal extent,
(c) the first blank is supplied to a forging press with a number of interacting die cushions, the blank being worked in a number of steps to form a first half of an in the main finished product, having a cross section essentially in the form of a U-profile with a predetermined varying height, width and material thickness along its length,
(d) a second blank is conveyed through a furnace for heating to working temperature,
(e) the second blank is conveyed between a pair of rolls with profiled surfaces, the blank being preshaped in one or more steps to form an intermediate product with a predetermined profile along its longitudinal extent,
(f) the second blank is supplied to a forging press with a number of interacting die cushions, the blank being worked in a number of steps to form a second half of an in the main finished product, having a cross section essentially in the form of a U-profile with a predetermined varying height, width and material thickness along its length, the second blank in the main being a copy of the first blank,
(g) the first blank and the second blank are joined together in a final step, at least along their respective edges, to form a composite hollow construction element.

In contrast to known art, the first blank and the second blank are forged horizontally, that is to say during working the main horizontal dividing plane of the blank coincides in the main with the vertical plane in which the construction element is intended to be mounted.

The starting material can be, for example, a round, square or rectangular blank which is cut to the desired length, after which it is heated in a furnace to a working temperature suitable for the material. When use is made of, for example, air-hardening, microalloyed steel, the blank is heated to 1250-1300°C, preferably to 1280°C. In a first step, the blank is provided with a suitable cross section with the aid of a pair of rotating rolls, which can be profiled. The rolled blank is then moved to a forging press for working into final shape.

The forging operation comprises a first step in which a pair of first interacting die cushions shape the material in the first blank so that during working it is provided with a predetermined varying height in a vertical plane along its longitudinal extent, the blank being provided with its main basic shape in this plane. The blank is then moved to a new forging press, or is worked by a new die cushion, which performs a second step in which a pair of second interacting die cushions shape the material in the first blank so that it is provided with a predetermined varying thickness along one or more of the side surfaces, bottom surface and upper edge surfaces of the profile along its longitudinal extent. This second step is repeated one or more times in further forging presses or further die cushions, successive die cushions shaping the blank until it has been provided with its final shape. In this way, it is possible to redistribute the material of the blank both in its cross section and along its longitudinal extent. By suitable design of the die cushions, the blank can be shaped freely as far as the forging process allows along both its inner and its outer periphery.

In order to produce a closed profile, the first blank must be joined together with a second blank. The second blank consists of the same starting material as the first blank. The second blank is preshaped and finally shaped in the same way as the first blank in a separate forging operation in the same press, or in a separate press, into in the main the same profile as the first blank relative to the dividing plane of the die cushions. An especially advantageous embodiment is to form both the blanks with identical profiles in the same press tool, one blank then being turned so that the edges of the blanks in the dividing plane can be placed against one another.

Before the first blank and the second blank are joined together to form a united construction element, further heating of at least the outer edges of each blank takes place. According to a preferred embodiment, the joining-together takes place by flash butt welding. Flash butt welding is a process intended to produce a butt weld with the same strength as in a corresponding forged blank. This is suitably effected by the blanks being clamped firmly in contact with one another and pressed together in a controlled way while a welding current is applied in order to melt the material in the join between them.

According to an alternative embodiment, joining-together can take place by the joining edges of the first blank and the second blank being heated by an induction coil, after which they are placed between a pair of interacting die cushions in a press and joined together by forge welding. Alternatively, the joining edges of the first blank and the second blank can be heated simultaneously with the aid of a means for heating introduced between the first blank and the second blank. The blanks are held between a pair of interacting die cushions in a press, after which they are joined together by forge welding. Said means for heating can consist of induction elements, gas flames or the like.

In a final operation, trimming of what is known as flash along the joined-together edges of the profile is effected. This can take place either in the same pressing operation as for the joining-together of the first blank and the second blank, or by separate trimming of the outer edges of the composite profile. The profile is thus provided with a predetermined varying height along its entire longitudinal extent, seen in the plane in which the construction element is intended to be mounted.

The end result is an elongate construction element with a hollow closed cross-sectional profile. The element comprises a first portion with a cross section essentially in the form of a U-profile which has a predetermined varying width, height and material thickness along its length, and a second portion which has an in the main identical U-profile. The two U-profiles are turned with the open parts of each profile facing one another and are joined together at least along the edge surfaces of each U-profile. The term "edge surfaces" or "joining surfaces" comprises all the surfaces where the U-profiles make contact with one another in or close to the dividing plane. Examples of such surfaces are the outer peripheral delimiting surface of each profile, and other surfaces where the edge surfaces of a U-profile are united to form a surface or where surfaces separate from the edge surfaces are located in or close to the dividing plane.

The assembled U-profiles have an essentially vertical dividing plane with regard to the main plane in which the construction element is intended to be used. The mutually facing edge surfaces of the U-profiles are in the main located in this plane. It is also possible to provide the respective edge surfaces with interacting projections and cutouts. Such projections and cutouts contribute both to simplified positioning of the U-profiles relative to one another when they are to be joined together and to the strength of the composite construction element after joining-together.

The embodiments indicated above afford considerably greater possibilities for optimizing the material thickness of the construction element compared with known art. On the one hand, the material can be distributed so that the greatest thickness is obtained where the loads on the construction element are greatest, and, on the other hand, material can be moved toward the periphery of the construction element, which increases its torsional stiffness. A hollow profile of this kind moreover provides a great saving of weight compared with a corresponding product forged in a conventional way.

In order further to increase the strength, the construction element can be made from an air-hardening, microalloyed steel. The product therefore does not need to be hardened or heat-treated in another way after joining-together of the two portions. It is of course possible to use steel of another grade, but further heat-treatment or other aftertreatment, which increases costs, may then be necessary in order to achieve the desired strength.

A construction element which it is suitable to manufacture in this way is a front axle beam. By using the method above, it is possible to manufacture such a beam with a 30% lower weight than a conventionally forged beam (see, for example, EP-A2-0 059 038 above).

As mentioned above, it is possible to optimize the manufacturing method so that the greatest material thickness of the front axle beam is found adjacent to mounting points and areas which are to be loaded by external forces and torques. The method also makes it possible to adapt the cross section of the front axle beam in such a way that it has essentially the same outer contours in both vertical and horizontal planes as a conventionally forged solid beam. By virtue of providing the outer contours of the beam with the same shape, and also the same offset (height of the kingpin supports relative to the mounting points of the resilient elements in the vertical direction) and drop (height of the upper central point of the beam relative to the mounting points of the resilient elements in the vertical direction) as a standard beam for a given vehicle, it can be used without modifications having to be made in existing vehicles. It is also possible to retain existing mounting points and mechanical interfaces for kingpin supports, springs and the like.

### DESCRIPTION OF FIGURES

The invention will emerge in greater detail from the following description of a preferred embodiment, shown as an example, with reference to the accompanying diagrammatic drawings, in which:
- Figure 1: shows a diagrammatic representation of the steps comprised by a preferred embodiment of the method according to the invention.
- Figure 2: shows a perspective view of two shaped blanks before final joining-together to form a front axle beam, according to a preferred embodiment.
- Figure 3: shows a front axle beam comprising two blanks according to Figure 2 after joining-together.
- Figure 4: illustrates a flash butt welding machine for joining two blanks together to form a front axle beam, according to a preferred embodiment.
- Figure 5: illustrates a flash butt welding machine according to Figure 4 after joining-together of a front axle beam.

### PREFERRED EMBODIMENTS

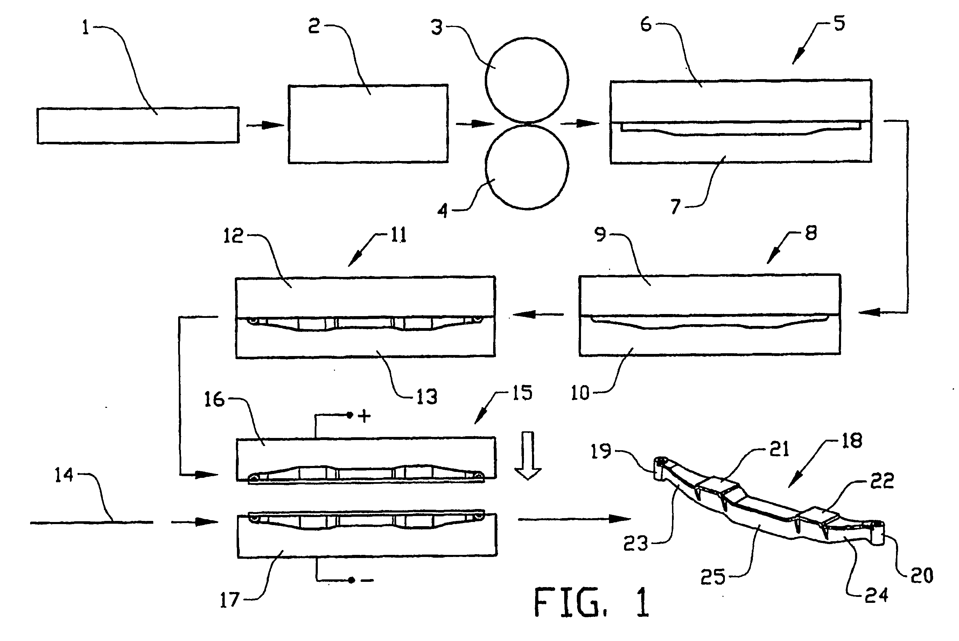

Figure 1 shows a preferred embodiment of the method according to the invention, which method comprises a number of steps for manufacturing a composite hollow construction element, in this case a front axle beam for heavy-duty vehicles.

A first blank 1, which has been cut to a predetermined length, is conveyed through an induction furnace 2 where it is heated to working temperature. When use is made of, for example, air-hardening, microalloyed steel, the blank is heated to 1250-1300°C, preferably to 1280°C. When the correct temperature has been reached, the blank is conveyed through a pair of profiled rolls 3, 4 which are profiled so as to provide the blank 1 with a suitable starting cross section along its longitudinal extent. By suitable design of the respective profiles of the rolls 3, 4, an intermediate product is obtained, the cross section and material thickness of which vary along the length of the blank in a way which at least partly corresponds to the finished product, or a rough approximation of its final U-profile. At this stage, the blank 1 is still essentially straight, at least along the peripheral edges, with a number of depressions along the central part.

In the next step, the preshaped blank is moved to a first forging press 5, with upper and lower interacting die cushions 6, 7. In this forging press 5, the shaping of the blank 1 is started, its cross section being provided with a more marked U-profile in certain predetermined areas where great torsional resistance is desirable. Examples of such areas are what are known as the swan-necks 23, 24 at the outer ends of the front axle beam, which swan-necks connect a pair of kingpin supports 19, 20 to the central portion 25 of the beam. In other areas, where great bending resistance is desirable, transverse ribs are retained between the opposite vertical sides of the profile. Examples of such areas are mounting points 21, 22 for the resilient elements (not shown) which are placed between the chassis of the vehicle and the front axle beam. Such resilient elements can consist of, for example, air bellows. In addition to the shaping of the cross section of the blank 1, deformation in the horizontal direction and the vertical direction is also started, in order to give the beam the desired width and, respectively, vertical height, also called drop, along its longitudinal extent. Seen in the dividing plane of the die cushions, this shaping gives the blank a varying height measured in a vertical plane and also a varying distance from a horizontal plane through the outer ends of the blank 1. Relative to said dividing plane, the greatest vertical height of the finished beam and its greatest distance from the horizontal plane coincide with the portions of the beam for mounting resilient elements. The horizontal dividing plane of the die cushions will in this connection coincide with a vertical plane through a composite hollow front axle beam in the position in which the beam is intended to be used.

In the following step, the blank is moved to a second and third forging press 8, 11 with respective upper and lower die cushions 9, 10; 12, 13. When the blank leaves the third forging press 11, it has been provided with its final shape and is ready to be joined together with a second blank 14 to form a composite hollow beam.

For the sake of clarity, the forging process above is described and illustrated as a number of press tools placed one after another. It is of course possible to shape the blanks in one and the same forging press, only the die cushions then being moved between each working step. The invention per se is not limited to one of these forging processes.

The number of steps required in order to obtain the desired shape of the blank can of course be varied within the scope of the invention, as the number is directly dependent on the properties of the starting material and the degree of deformation desired.

The second blank 14 can originate from the same starting material as the first blank. The second blank is preshaped and finally shaped in the same way as the first blank 1 in a separate forging operation and, if appropriate, in a separate press into in the main the same profile as the first blank relative to the dividing plane of the die cushions.

According to a preferred embodiment, two identical blanks are manufactured, one blank then being turned toward the other so that their opposite edges are placed against one another when the joining-together operation takes place. In this way, both the blanks can be shaped in the same press tool, which results in a reduced manufacturing cost.

In order to join the first blank 1 and the second blank 14 together, they are conveyed into a flash butt welding machine 15 with interacting fixtures or die cushions 16, 17, the two blanks 1, 14 being positioned in their respective fixtures 16, 17. Before working and joining-together can take place, the first blank 1 and the second blank 14 are brought into contact with one another along their respective edge surfaces.

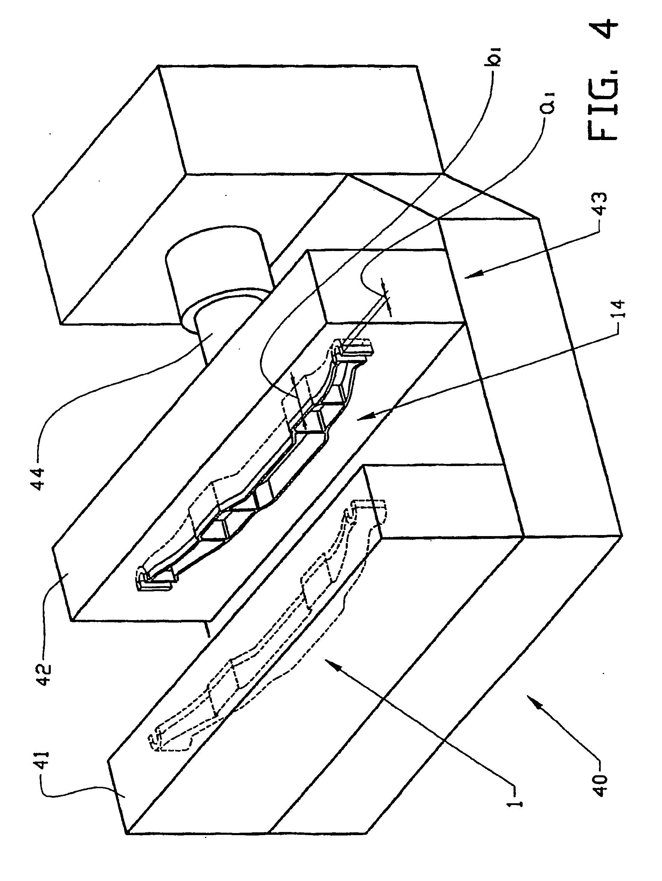

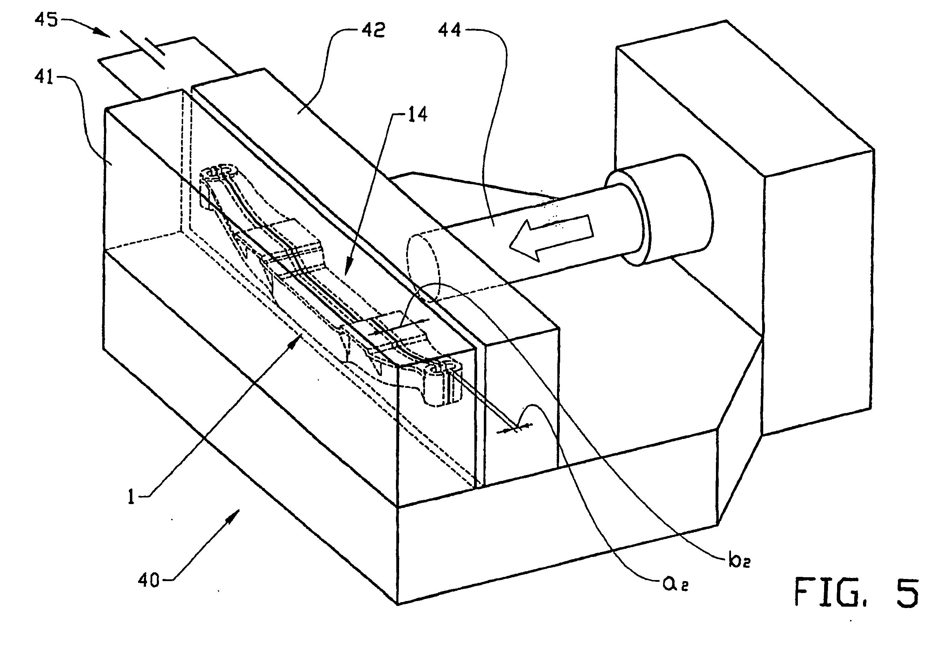

The blanks are clamped firmly in contact with one another and are then pressed together in a controlled way while a welding current from a current source, such as a welding transformer, is applied in order to melt a controlled quantity of material in the join between the edges of the blanks. The molten material will be pressed out of the join and forms a flash, a corresponding reduction of the width of the blanks taking place at the same time. This will be described in greater detail in connection with Figures 4 and 5. In order that the composite construction element will have the desired width, the edge surfaces of the blanks 1, 14 therefore have to be forged to a slightly greater dimension in a direction at right angles to the dividing plane of the die cushions. The flash can be removed directly by interacting tools in the fixtures 16, 17 or in subsequent machining. Any oxides and other impurities on the edge surfaces will be pressed out of the join together with the melt during the process, which produces a homogeneous joint with the same strength and other properties as the forged blanks. The result is a composite elongate construction element in the form of a hollow front axle beam.

According to an alternative embodiment, it is also possible to heat the interacting edges of the two blanks 1, 14 separately before they are joined together by forge welding along all the surfaces where the first blank and the second blank are in contact with one another. Heating of the two blanks can also be effected with the aid of gas flames or the like. In connection with the first blank and the second blank being forge-welded together, trimming and removal of superfluous material (what is known as flash) around the edges of the workpiece can be carried out. According to another alternative embodiment, it is also possible to weld the two blanks 1, 14 together.

When the shaping of the front axle beam is complete, it undergoes final machining, mounting holes for the resilient elements being drilled and the kingpin support holders being machined to their final shape and tolerance.

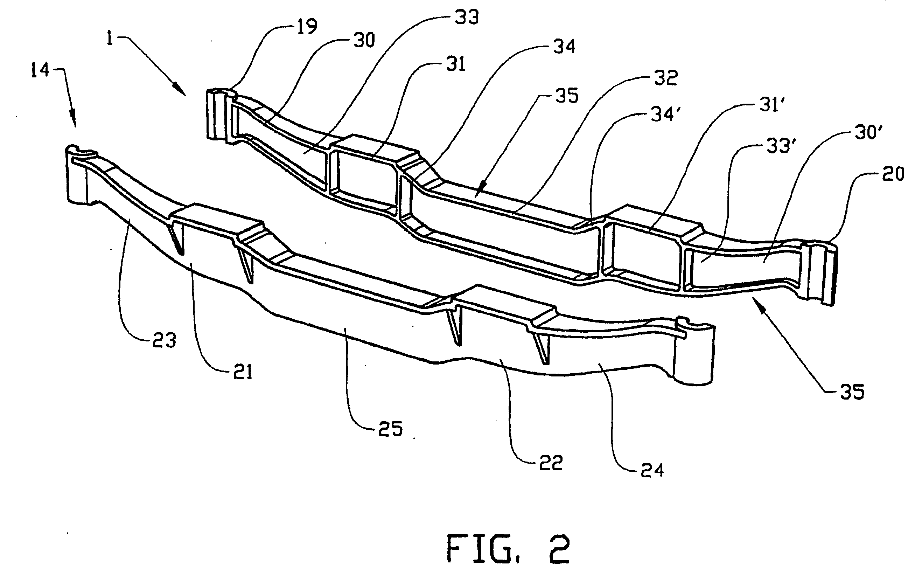

Figure 2 shows the first blank 1 and the second blank 14 as they appear after final shaping, when they are ready to be joined together. The figure shows a view of the front axle beam from an angle obliquely upward, the varying horizontal and vertical extent of the first blank 1 along its length being visible. In this connection, the inner cavities 30, 30', 31, 31' and 32 of the first blank 1, its transverse reinforcing ribs 33, 33', 34, 34' and its kingpin support holders 19, 20 emerge clearly. In this embodiment, the all-round edge surfaces 35 of the first blank 1 shown have an essentially uniform thickness along large parts of its length, but it is of course possible to vary its thickness along the longitudinal extent of the beam, for example by shaping it with a greater material thickness in areas which will be subjected to greater loading after mounting in a vehicle. This is suitably brought about in connection with the forging operations for the blank concerned. The second blank 14 shows the outer contours of the front axle beam. In this connection, the swan-necks 23, 24 of the front axle beam, which connect the kingpin supports 19, 20 to the central portion 25 of the beam, are visible.

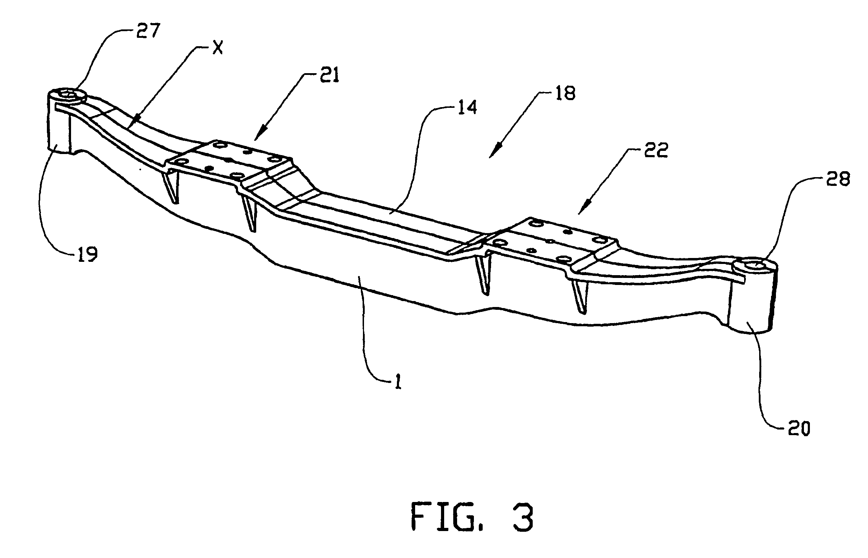

Figure 3 shows a finished front axle beam which has been trimmed to a predetermined width along its peripheral edge. Moreover, the kingpin supports 19, 20 have been machined and provided with through-holes 27, 28 for mounting kingpins, and holes have been drilled for attachment elements at the mounting points 21, 22 for a pair of air bellows (not shown) between the front axle beam and the chassis of the vehicle.

This preferred embodiment shows a front axle beam composed of a pair of in the main symmetrical blanks 1, 14, the vertical dividing plane X of the front axle beam running through the join in the center of the front axle beam. The finished front axle beam will have the same outer dimensions as a conventionally forged front axle beam, for which reason it can be mounted in an existing vehicle without any modifications of the vehicle having to be made.

Alternative embodiments with a dividing plane displaced from the vertical plane of symmetry of the front axle beam are of course also possible.

Figure 4 illustrates diagrammatically a flash butt welding machine 40 before the first blank 1 and the second blank 14 are joined together. The flash butt welding machine 40 comprises a first fixture 41 for the first blank 1 and a second fixture 42 for the second blank 14. The second fixture 42 is displaceable toward the rigidly mounted first fixture 41 along a guide 43. As indicated in the figure, each blank has a predetermined protrusion a₁ from the front end surface of the respective fixture 41, 42. The pushing movement is preferably brought about by a hydraulic cylinder 44, or alternatively by corresponding mechanical means.

Figure 5 illustrates diagrammatically how the first blank 1 and the second blank 14 are joined together in the flash butt welding machine 40. In a first step, the blanks are clamped firmly in contact with one another by the second fixture 42 being displaced by the hydraulic cylinder 44. In this position, the distance between the mutually facing end surfaces of the fixtures 41, 42 is adapted so that the width b₁ of each blank in the horizontal direction before joining-together is slightly greater than the corresponding width b₂ of each blank in the joined-together front axle beam. The two blanks 1, 14 are then pressed together in a controlled way with the aid of the cylinder at the same time as a welding current from a current source 45, such as a welding transformer, is applied in order to melt a predetermined quantity of the material in the join between them. After the joining-together, both the blanks 1, 14 have a reduced second protrusion a₂, and a correspondingly reduced width b₂. That part of the edges which is heated to melting temperature thus corresponds to the difference in protrusion between said first protrusion a₁ and said second protrusion a₂. The reduction of the width of the blanks during the joining-together means that the molten material will be pressed out of the join and forms a flash, which can be removed directly by interacting tools in the fixtures 41, 42 or in subsequent machining.

The invention is not limited to the embodiments indicated above but can be applied to all types of construction element which can be manufactured with the aid of the method described above.

## Claims

1. A method for manufacturing a hollow, elongate construction element, **characterized in that** it comprises the following steps:
(a) a first blank (1) is conveyed through a furnace (2) for heating to working temperature,
(b) the first blank (1) is conveyed between a pair of rolls (3, 4) with profiled surfaces, the blank being preshaped in one or more steps to form an intermediate product with a predetermined profile along its longitudinal extent,
(c) the first blank (1) is supplied to a forging press with a number of interacting die cushions, the blank being worked in a number of steps (5, 8, 11) to form a first half of an in the main finished product, having a cross section essentially in the form of a U-profile with a predetermined varying height, width and material thickness along its length,
(d) a second blank (14) is conveyed through a furnace (2) for heating to working temperature,
(e) the second blank (14) is conveyed between a pair of rolls (3, 4) with profiled surfaces, the blank being preshaped in one or more steps to form an intermediate product with a predetermined profile along its longitudinal extent,
(f) the second blank (14) is supplied to a forging press with a number of interacting die cushions, the blank being worked in a number of steps (5, 8, 11) to form a second half of an in the main finished product, having a cross section essentially in the form of a U-profile with a predetermined varying height, width and material thickness along its length, the second blank (14) in the main being a copy of the first blank (1),
(g) the first blank (1) and the second blank (14) are joined together in a final step (15), at least along their respective edges, to form a composite hollow construction element (18).

2. The method as claimed in claim 1, **characterized in that** both the first blank and the second blank are forged horizontally with regard to the main plane in which the construction element is intended to be used.

3. The method as claimed in claim 1 or 2, **characterized in that** the forging operation comprises a first step in which a pair of first interacting die cushions shape the material in the first blank so that it is provided with a predetermined varying height in a horizontal plane along its longitudinal extent, the blank being provided with its main basic shape in this plane.

4. The method as claimed in any one of claims 1-3, **characterized in that** the forging operation comprises a second step in which a pair of second interacting die cushions shape the material in the first blank so that it is provided with a predetermined varying thickness along one or more of the side surfaces, bottom surface and upper edge surfaces of the profile along its longitudinal extent.

5. The method as claimed in claim 4, **characterized in that** the second step of the forging operation is repeated one or more times in successive die cushions, until the first blank has been provided with its final shape.

6. The method as claimed in any one of claims 1-5, **characterized in that** the second blank is preshaped in a separate forging operation, in which it is shaped into an in the main identical profile which is turned relative to the U-profile of the first blank in the dividing plane of the die cushions.

7. The method as claimed in any one of claims 1-6, **characterized in that** the first blank and the second blank are joined together by flash butt welding.

8. The method as claimed in any one of claims 1-6, **characterized in that** the first blank and the second blank are heated in a pair of separate induction furnaces, after which they are placed between a pair of interacting die cushions in a press and joined together by forge welding.

9. The method as claimed in any one of claims 1-6, **characterized in that** the first blank and the second blank are heated simultaneously with the aid of means for heating introduced between the first blank and the second blank, which blanks are held between a pair of interacting die cushions in a press, after which they are joined together by forge welding.

10. The method as claimed in one of claims 8 and 9, **characterized in that** the heating is effected with the aid of induction elements, gas flame or the like.

11. The method as claimed in any one of the preceding claims, **characterized in that** two identical blanks are joined together.

12. The method as claimed in any one of the preceding claims, **characterized in that** trimming of flash along the joined-together edges of the profile is effected in the same operation as the joining-together of the first blank and the second blank, the profile being provided with a predetermined varying height along its longitudinal extent.

13. A hollow elongate construction element manufactured using the method as claimed in claim 1, **characterized in that** the construction element comprises a first portion with a cross section essentially in the form of a U-profile which has a predetermined varying width, height and material thickness along its length, and a second portion in the form of a U-profile which has an in the main identical profile which is turned relative to the U-profile of the first blank along a vertical dividing plane in the construction element and is joined together with the first portion at least along its edge surfaces.

14. The construction element as claimed in claim 13, **characterized in that** the construction element is made from a microalloyed steel.

15. The construction element as claimed in claim 13 or 14, **characterized in that** the construction element constitutes a front axle beam.

16. The construction element as claimed in claim 15, **characterized in that** the greatest material thickness of the front axle beam is found adjacent to mounting points and areas which are to be loaded by external forces and torques.

17. The construction element as claimed in claim 13 or 14, **characterized in that** the cross section of the front axle beam has essentially the same outer contours in both vertical and horizontal planes as a conventionally forged solid beam.

## Patentansprüche

1. Verfahren zum Herstellen eines hohlen, länglichen Konstruktionselements, **dadurch gekennzeichnet, dass** es die folgenden Schritte umfasst:
(a) ein erster Pressling (1) wird durch einen Ofen (2) transportiert, um ihn auf Arbeitstemperatur zu erhitzen,
(b) der erste Pressling (1) wird zwischen ein paar Rollen (3, 4) mit profilierten Oberflächen transportiert, wobei der Pressling in einem oder mehreren Schritten vorgeformt wird, um ein Zwischenprodukt mit einem vorbestimmten Profil entlang seiner Längserstreckung zu bilden,
(c) der erste Pressling (1) wird einer Schmiedepresse mit einer Anzahl zusammenwirkender Formkissen zugeführt, wobei der Pressling in einer Anzahl von Schritten (5, 8, 11) bearbeitet wird, um eine erste Hälfte eines hauptsächlich fertig gestellten Produkts zu bilden, das einen Querschnitt aufweist, der im Wesentlichen in der Form eines U-Profils mit einer vorbestimmten entlang seiner Länge variierenden Höhen, Breite und Materialdicke ist,
(d) ein zweiter Pressling (14) wird durch einen Ofen (2) transportiert, um ihn auf Arbeitstemperatur zu erhitzen,
(e) der zweite Pressling (14) wird zwischen ein paar Rollen (3, 4) mit profilierten Oberflächen transportiert, wobei der Pressling in einem oder mehreren Schritten vorgeformt wird, um ein Zwischenprodukt mit einem vorbestimmten Profil entlang seiner Längserstreckung zu bilden,
(f) der zweite Pressling (14) wird einer Schmiedepresse mit einer Anzahl zusammenwirkender Formkissen zugeführt, wobei der Pressling in einer Anzahl von Schritten (5, 8, 11) bearbeitet wird, um eine zweite Hälfte eines hauptsächlich fertig gestellten Produkts zu erzeugen, das einen Querschnitt aufweist, der im Wesentlichen in der Form eines U-Profils mit einer vorbestimmten entlang seiner Länge variierenden Höhe, Breite und Materialdicke ist, wobei der zweite Pressling (14) hauptsächlich eine Kopie des ersten Presslings (1) ist;
(g) der erste Pressling (1) und der zweite Pressling (14) werden in einem finalen Schritt (15) miteinander verbunden, zumindest entlang ihrer jeweiligen Kanten, um ein hohles Verbundkonstruktionselement (18) zu bilden.

2. Verfahren nach Anspruch 1, **dadurch gekennzeichnet, dass** sowohl der erste Pressling als auch der zweite Pressling in Bezug auf die Hauptebene, in der das Konstruktionselement verwendet werden soll, horizontal geschmiedet werden.

3. Verfahren nach Anspruch 1 oder 2, **dadurch gekennzeichnet, dass** der Schmiedeprozess einen ersten Schritt umfasst, in dem ein Paar erster zusammenwirkender Formkissen das Material in dem ersten Pressling so formen, dass es in einer horizontalen Ebene entlang seiner Längserstreckung mit einer vorbestimmten variierenden Höhe versehen ist, wobei der Pressling mit seiner hauptsächlichen Grundform in dieser Ebene vorgesehen ist.

4. Verfahren nach einem der Ansprüche 1 bis 3, **dadurch gekennzeichnet, dass** der Schmiedeprozess einen zweiten Schritt umfasst, in dem ein Paar zweiter zusammenwirkender Formkissen das Material in dem ersten Pressling so formen, dass es entlang einer oder mehrerer der Seitenoberflächen, Bodenoberfläche und oberen Kantenoberflächen des Profils entlang seiner Längserstreckung mit einer vorbestimmten variierenden Dicke versehen ist.

5. Verfahren nach Anspruch 4, **dadurch gekennzeichnet, dass** der zweite Schritt des Schmiedeprozesses ein oder mehrmals in aufeinanderfolgenden Formkissen wiederholt wird, bis der erste Pressling mit seiner finalen Form versehen ist.

6. Verfahren nach einem der Ansprüche 1 bis 5, **dadurch gekennzeichnet, dass** der zweite Pressling in einem separaten Schmiedeprozess vorgeformt wird, in dem er in ein hauptsächlich identisches Profil geformt wird, das relativ zu dem U-Profil des ersten Presslings in der Trennungsebene der Formkissen gedreht wird.

7. Verfahren nach einem der Ansprüche 1 bis 6, **dadurch gekennzeichnet, dass** der erste Pressling und der zweite Pressling durch Abbrennstumpfschweißen miteinander verbunden werden.

8. Verfahren nach einem der Ansprüche 1 bis 6, **dadurch gekennzeichnet, dass** der erste Pressling und der zweite Pressling in einem Paar separater Induktionsöfen erhitzt werden, wonach sie zwischen einem Paar zusammenwirkender Formkissen in einer Presse platziert werden und durch Schmiedeschweißen miteinander verbunden werden.

9. Verfahren nach einem der Ansprüche 1 bis 6, **dadurch gekennzeichnet, dass** der erste Pressling und der zweite Pressling gleichzeitig mit der Hilfe eines Mittels zum Erhitzen, das zwischen dem ersten und dem zweiten Pressling eingeführt wird, erhitzt werden, welche Presslinge zwischen einem Paar zusammenwirkender Formkissen in einer Presse gehalten werden, wonach sie durch Schmiedeschweißen miteinander verbunden werden.

10. Verfahren nach einem der Ansprüche 8 und 9, **dadurch gekennzeichnet, dass** das Erhitzen mit der Hilfe von Induktionselementen, einer Gasflamme oder dergleichen bewirkt wird.

11. Verfahren nach einem der vorhergehenden Ansprüche, **dadurch gekennzeichnet, dass** zwei identische Presslinge miteinander verbunden werden.

12. Verfahren nach einem der vorhergehenden Ansprüche, **dadurch gekennzeichnet, dass** ein Abtrennen von Graten entlang der verbundenen Kanten des Profils in demselben Prozess wie das miteinander Verbinden des ersten Presslings und des zweiten Presslings bewirkt wird, wobei das Profil entlang seiner Längserstreckung mit einer vorbestimmten variierenden Höhe versehen wird.

13. Hohles längliches Konstruktionselement, das unter Verwendung des Verfahrens nach Anspruch 1 hergestellt wurde, **dadurch gekennzeichnet, dass** das Konstruktionselement einen ersten Teil mit einem Querschnitt umfasst, der im Wesentlichen in der Form eines U-Profils ist, das eine vorbestimmte entlang seiner Länge variierende Breite, Höhe und Materialdicke hat, und einen zweiten Teil in der Form eines U-Profils, der ein hauptsächlich identisches Profil aufweist, das entlang einer vertikal teilenden Ebene in dem Konstruktionselement relativ zu dem U-Profil des ersten Presslings gedreht und zumindest entlang seiner Kantenoberflächen mit dem ersten Teil verbunden ist.

14. Konstruktionselement nach Anspruch 13, **dadurch gekennzeichnet, dass** das Konstruktionselement aus einem Mikrolegierungsstahl gemach ist.

15. Konstruktionselement nach Anspruch 13 oder 14, **dadurch gekennzeichnet, dass** das Konstruktionselement einen Vorderachskörper bildet.

16. Konstruktionselement nach Anspruch 15, **dadurch gekennzeichnet, dass** die größte Materialdicke des Vorderachskörpers neben Befestigungspunkten und Bereichen zu finden ist, die durch externe Kräfte und Drehmomente belastet werden sollen.

17. Konstruktionselement nach Anspruch 13 oder 14, **dadurch gekennzeichnet, dass** der Querschnitt des Vorderachskörpers im Wesentlichen dieselbe Außenkontur sowohl in der vertikalen als auch der horizontalen Ebenen wie ein konventionell geschmiedeter massiver Körper hat.

## Revendications

1. Procédé de fabrication d'un élément de construction allongé, creux, **caractérisé en ce qu'**il comprend les étapes suivantes consistant à :
(a) transporter un premier flanc (1) à travers un four (2) pour le chauffer jusqu'à température d'utilisation,
(b) transporter le premier flanc (1) entre une paire de rouleaux (3, 4) présentant des surfaces profilées, le flanc étant préformé au cours d'une ou plusieurs étapes pour former un produit intermédiaire avec un profil prédéterminé le long de son extension longitudinale,
(c) fournir le premier flanc (1) à une presse à forger présentant un certain nombre de coussins pneumatiques interactifs, le flanc étant usiné au cours d'un certain nombre d'étapes (5, 8, 11) pour former une première moitié d'un produit fini pour l'essentiel, présentant une section transversale essentiellement sous la forme d'un profilé en U avec une hauteur, une largeur et une épaisseur de matériau variables prédéterminées sur toute sa longueur,
(d) transporter un second flanc (14) à travers un four (2) pour le chauffer jusqu'à température d'utilisation,
(e) transporter le second flanc (14) entre une paire de rouleaux (3, 4) présentant des surfaces profilées, le flanc étant préformé au cours d'une ou plusieurs étapes pour former un produit intermédiaire présentant un profil prédéterminé le long de son extension longitudinale,
(f) fournir le second flanc (14) à une presse à forger présentant un certain nombre de coussins pneumatiques interactifs, le flanc étant usiné au cours d'un certain nombre d'étapes (5, 8, 11) pour former une seconde moitié d'un produit fini pour l'essentiel, présentant une section transversale essentiellement sous la forme d'un profilé en U avec une hauteur, une largeur et une épaisseur de matériau variables prédéterminées sur toute sa longueur, le second flanc (14) étant pour l'essentiel une copie du premier flanc (1),
(g) réunir le premier flanc (1) et le second flanc (14) au cours d'une étape finale (15), au moins le long de leurs bords respectifs, pour former un élément de construction creux composite (18).

2. Procédé selon la revendication 1, **caractérisé en ce que** le premier flanc et le second flanc sont forgés horizontalement par rapport au plan principal dans lequel l'élément de construction est destiné à être utilisé.

3. Procédé selon la revendication 1 ou 2, **caractérisé en ce que** l'opération de forgeage comprend une première étape dans laquelle une paire de premiers coussins pneumatiques interactifs façonnent le matériau du premier flanc de manière à le doter d'une hauteur variable prédéterminée dans un plan horizontal le long de son extension longitudinale, le flanc étant doté de sa forme de base principale dans ce plan.

4. Procédé selon l'une quelconque des revendications 1 à 3, **caractérisé en ce que** l'opération de forgeage comprend une deuxième étape dans laquelle une paire de seconds coussins pneumatiques interactifs façonnent le matériau du premier flanc de manière à le doter d'une épaisseur variable prédéterminée le long d'une ou plusieurs des surfaces latérales, de la surface inférieure et des surfaces de bord supérieures du profilé le long de son extension longitudinale.

5. Procédé selon la revendication 4, **caractérisé en ce que** la seconde étape de l'opération de forgeage est répétée une ou plusieurs fois dans des coussins pneumatiques successifs, jusqu'à ce que le premier flanc soit doté de sa forme finale.

6. Procédé selon l'une quelconque des revendications 1 à 5, **caractérisé en ce que** le second flanc est préformé au cours d'une opération de forgeage séparée, dans laquelle il est façonné en un profilé identique pour l'essentiel, qui est tourné par rapport au profilé en U du premier flanc dans le plan de division des coussins pneumatiques.

7. Procédé selon l'une quelconque des revendications 1 à 6, **caractérisé en ce que** le premier flanc et le second flanc sont réunis par soudure en bout par étincelage.

8. Procédé selon l'une quelconque des revendications 1 à 6, **caractérisé en ce que** le premier flanc et le second flanc sont chauffés dans une paire de fours à induction séparés, après quoi ils sont placés entre une paire de coussins pneumatiques interactifs dans une presse et réunis par soudage à la forge.

9. Procédé selon l'une quelconque des revendications 1 à 6, **caractérisé en ce que** le premier flanc et le second flanc sont chauffés simultanément à l'aide d'un moyen de chauffage introduit entre le premier flanc et le second flanc, lesdits flancs étant maintenus entre une paire de coussins pneumatiques interactifs dans une presse, après quoi ils sont réunis par soudage à la forge.

10. Procédé selon l'une quelconque des revendications 8 et 9, **caractérisé en ce que** le chauffage est effectué à l'aide d'éléments à induction, d'une flamme de brûleur à gaz ou similaire.

11. Procédé selon l'une quelconque des revendications précédentes, **caractérisé en ce que** deux flancs identiques sont réunis.

12. Procédé selon l'une quelconque des revendications précédentes, **caractérisé en ce qu'**un ébarbage de bavure le long des bords réunis du profilé est effectué au cours de la même opération que la réunion du premier flanc et du second flanc, le profilé étant doté d'une hauteur variable prédéterminée le long de son extension longitudinale.

13. Elément de construction allongé creux fabriqué en utilisant le procédé selon la revendication 1, **caractérisé en ce que** l'élément de construction comprend une première partie avec une section transversale essentiellement sous la forme d'un profilé en U qui présente une largeur, une hauteur et une épaisseur de matériau variables prédéterminées sur toute sa longueur, et une seconde partie sous la forme d'un profilé en U qui présente un profil essentiellement identique qui est tourné par rapport au profilé en U du premier flanc le long d'un plan de division verticale de l'élément de construction et est réuni avec la première partie au moins le long de ses surfaces de bord.

14. Elément de construction selon la revendication 13, **caractérisé en ce que** l'élément de construction est réalisé à partir d'un acier microallié.

15. Elément de construction selon la revendication 13 ou 14, **caractérisé en ce que** l'élément de construction constitue une poutre d'essieu avant.

16. Elément de construction selon la revendication 15, **caractérisé en ce que** l'épaisseur de matériau la plus importante de la poutre d'essieu avant est adjacente aux points de montage et aux zones qui doivent être mises en charge par des couples et des forces externes.

17. Elément de construction selon la revendication 13 ou 14, **caractérisé en ce que** la section transversale de la poutre d'essieu avant présente dans les plans verticaux et horizontaux essentiellement les mêmes contours extérieurs qu'une poutre massive forgée de manière conventionnelle.
